# EUROPEAN PATENT APPLICATION

(11) **EP 4 124 077 A1**
(43) Date of publication of application: **25.01.2023**
(21) Application number: 21186765.0
(22) Date of filing: 20.07.2021
(51) Int. Cl.: H04W 4/029, H04W 4/38, H04W 4/44, H04W 4/46, H04W 84/00

(54) **A METHOD FOR TRANSMITTING A DATA PACKAGE FROM A FIRST VEHICLE TO A CENTRAL ELECTRONIC COMPUTING DEVICE AS WELL AS A CORRESPONDING CENTRAL SYSTEM**

(71) Applicant: Volkswagen Aktiengesellschaft, 38440 Wolfsburg (DE)
(72) Inventor: Pfadler, Andreas, 13357 Berlin (DE); Schönauer, Moritz, 10247 Berlin (DE)

(57) **Abstract**

A method for transmitting a data package (2) from a first vehicle (3) to a central electronic computing device (4), the method comprising:
- evaluating a route (5) of at least a second vehicle (6);
- if the route (5) of the second vehicle (6) leads the second vehicle (6) in a receiving area (7) of an access point (8) and if the first vehicle (3) and the second vehicle (6) meet each other in a transmitting distance (9) for transmitting the data package (2) via a direct communication (10), then transmitting the data package (2) via the direct communication (10) from the first vehicle (3) to the second vehicle (6); and
- transmitting the data package (2) from the second vehicle (6) to the central electronic computing device (4) via the access point (8), when the second vehicle (6) is in the receiving area (7) of the access point (8).

Furthermore, the invention relates to a computer program product, a computer-readable storage medium as well as to a central system (1).

## Description

The invention relates to a method for transmitting a data package from a first vehicle to a central electronic computing device of a central system as well as to a corresponding computer program product, a computer-readable storage medium and a corresponding central system.

The future of mobility is inseparably linked with vehicles becoming simultaneously connected and automatic. It is foreseen that soon more and more automatic vehicles will drive on public roads. These vehicles usually drive in a fleet and require sending a huge amount of data to their backend. This data is needed to manage the fleet, improve the efficiency, improve automated driving functions, train some artificial intelligence, and/or optimize their performance. Part of this data has time restrictions, for example needs to be received at the back end within a certain time.

It is foreseen that automated vehicle fleets need to upload a high amount of data to the backend, for example some hundreds GB a month. Part of the data needs to be sent within a certain time. Legacy systems are not capable of uploading such huge amounts of data or do not always provide enough coverage.

US2019/0253853 A1 provides a vehicle that can establish a network of nearby vehicles in order to upload large amounts of data. An example vehicle includes a sensor, a communication system, and a processor. The processor is configured to establish a network comprising a plurality of nearby vehicles having respective data upload rates, separate data gathered by the sensor into segments based on the respective data upload rates, and transmit the plurality of nearby vehicles using the communication system, the segments and instructions for uploading these segments to a server.

It is an object of the invention to provide a method, a corresponding computer program product, a computer-readable storage medium and a corresponding central system by which a more efficient transmitting of a data package is realized.

This object is solved by a method, a corresponding computer program product, a computer-readable storage medium as well as a corresponding central system. Advantageous forms of configuration are presented in the depending claims.

One aspect of the invention relates to a method for transmitting a data package from a first vehicle to a central electronic computing device of a central system. A route of at least a second vehicle is evaluated. If the route of the second vehicle leads the second vehicle in a receiving area of an access point of the central system and if the first vehicle and the second vehicle meet each other in a transmitting distance for transmitting the data package via direct communication, then transmitting the data package via the direct communication from the first vehicle to the second vehicle is performed. The data package is transmitted from the second vehicle to the central electronic computing device via the access point, when the second vehicle is in the receiving area of the access point.

Therefore, a method is provided by which the data package of the first vehicle can be uploaded to the central electronic computing device by the second vehicle. In particular, the access point may provide, for example, a wireless LAN communication, whereby via the wireless LAN communication a higher amount of data can be uploaded than, for example, via a mobile network. Therefore, the higher amount of data has not to be uploaded by the first vehicle over a mobile network, but the data package is uploaded by the second vehicle when the second vehicle is arranged in the receiving area of the access point.

For example, the first vehicle can transmit the data package via a vehicle-to-vehicle communication (V2V) as direct communication. The direct communication may comprise a short-range communication or in general any D2D (device to device communication). When the first vehicle and the second vehicle are nearby, the first vehicle uploads the data package to the second vehicle via the direct communication.

In embodiments, communication, in other words transmission, reception or both, may take place among devices or vehicles directly. Such communication may make use of a mobile communication system. Such communication may be carried out directly, for example by means of Device-to-Device (D2D) communication. Such communication may be carried out using the specifications of a mobile communication system. An example of D2D is direct communication between vehicles, also referred to as Vehicle-to-Vehicle communication (V2V), car-to-car, Dedicated Short Range Communication (DSRC), respectively. Technologies enabling such D2D-communication include 802.11 p, 3GPP systems (4G, 5G, NR and beyond), etc.

In embodiments, the interface can be configured to wirelessly communicate in the mobile communication system. In order to do so radio resources are used, for example frequency, time, code, and/or spatial resources, which may be used for wireless communication with a base station transceiver as well as for direct communication. The assignment of the radio resources may be controlled by a base station transceiver, for example the determination which resources are used for D2D and which are not. Here and in the following radio resources of the respective components may correspond to any radio resources conceivable on radio carriers and they may use the same or different granularities on the respective carriers. The radio resources may correspond to a Resource Block (RB as in LTE/LTE-A/LTE-unlicensed (LTE-U)), one or more carriers, subcarriers, one or more radio frames, radio sub-frames, radio slots, one or more code sequences potentially with a respective spreading factor, one or more spatial resources, such as spatial sub-channels, spatial precoding vectors, any combination thereof, etc. For example, in direct Cellular Vehicle-to-Anything (C-V2X), where V2X includes at least V2V, V2-Infrastructure (V2I), etc., transmission according to 3GPP Release onward can be managed by infrastructure (so called mode 3) or run in a UE.

The electronic computing device may also be referred to as a backend server.

In particular, a third vehicle and a fourth vehicle, as well as a plurality of vehicles, may also be taken into consideration. For example, the first vehicle may send a request to the central electronic computing device that it wants to upload a data package. Then, the plurality of vehicles in a surrounding area of the first vehicle may be requested to send an upload capability of these vehicles. Furthermore, the plurality of vehicles send their driving route to the central electronic computing device. The central electronic computing device may then decide which might be the best vehicle to send the data package depending on the route and depending on the upload capacity of the plurality of vehicles.

According to an embodiment, the first vehicle is clustering collected data into a plurality of data packages and the plurality of data packages is prioritized and depending on the prioritization, the data packages are transmitted to the second vehicle. In particular, not every part of the collected data has to be transmitted/uploaded to the central electronic computing device. Therefore, the vehicle may prioritize inside of the vehicle the collected data and just transmit the prioritized data to the second vehicle. Therefore, only prioritized data packages are transmitted from the first vehicle to the second vehicle.

According to another embodiment, the collected data is prioritized depending on time restrictions of each of the collected data. For example, data corresponding to current traffic situations or current weather situations may comprise time restrictions, therefore, it has to be uploaded with a higher priority than, for example, data concerning available radio stations. Therefore, the collected data with time restrictions are transmitted to the central electronic computing device in a faster way and can be computed with a higher priority. The data, which are not prioritized may transmitted by the first vehicle via a cellular network, for example 3GPP -5G, if needed.

In another embodiment, the first vehicle transmits a transmission request to the central electronic computing device for transmitting the data package, and the central electronic computing device decides to which vehicle the data package is transmitted. For example, if there is a plurality of vehicles in the surroundings of the first vehicle, the central electronic computing device may decide to which vehicle the data package is transmitted. This is, for example, decided by the distance from the first vehicle to each of the plurality of vehicles and/or depending on an upload capacity of each of the vehicles. For example, one of the plurality of vehicles may provide a higher transmitting capacity than another one, so the central electronic computing device may decide that the data package is transmitted by the vehicle which comprises the higher upload capacity.

In another embodiment, the first vehicle transmits a transmission request to the second vehicle for transmitting the data package, and the second vehicle transmits a transmitting capacity to the first vehicle, wherein the first vehicle decides to transmit the data package depending on the transmitted transmitting capacity. For example, if the second vehicle has a low transmitting capacity, the first vehicle may decide that the data package is not transmitted to the second vehicle. Furthermore, if the second vehicle may have a high transmitting capacity, in particular for at least transmitting the data package, the first vehicle may decide to transmit the data package to the second vehicle, wherein the second vehicle then may transmit the data package via the access point to the central electronic computing device.

In another embodiment, the first vehicle and/or at least the second vehicle are automated vehicles. In particular, the driving routes of the automated vehicles are known from the central electronic computing device, wherein a planning of the transmission of the data package can be performed in a more efficient way.

According to another embodiment, the data package is just transmitted to the second vehicle if the second vehicle is earlier driving through a receiving area than the first vehicle. This has the advantage that the data package is just transmitted to the second vehicle if the second vehicle is earlier arriving in a receiving area of an access point. For example, if the first vehicle is earlier driving through a receiving area of an access point, the data package is not transmitted to the second vehicle, wherein the data package with time restrictions is earlier transmitted to the central electronic computing device.

Furthermore, when the data package is transmitted from the second vehicle to the central electronic computing device, the central electronic computing device transmits a confirmation message to the first vehicle for confirmation of receiving the data package. Therefore, when the data package is received by the central electronic computing device, the first vehicle gets a message that it does not have to transmit the data package again. Therefore, the first vehicle may delete the data package and therefore may have more storage capacity inside the vehicle for collecting new data.

According to an embodiment, if no transmitting of the data package from the first vehicle to the second vehicle is performed, then the first vehicle transmits the data package via a mobile communication network. Therefore, the data package is transmitted to the central electronic computing device using the mobile communication network, for example via GSM, GPRS, UMTS, LTE, or 5G. Therefore a reliable way of transmitting the data package is realized.

In advantageous form of configuration the first vehicle deletes the data package from an internal storage after transmitting the data package. Therefore, because the data package is stored external of the motor vehicle, the storage of the motor vehicle can be freed, wherein more storage for new data can be released. Therefore, a smaller storage inside of the motor vehicle can be used or other data inside the motor vehicle can be stored without the need of a further storage or a bigger storage.

In an embodiment a further data package from the first vehicle, which has not been transmitted to the second vehicle, is transmitted to the central electronic computing device via a mobile communication network. For the example the prioritized data is transmitted to the second motor vehicle and from the second motor vehicle to the central electronic computing device. The data, which is not prioritized may remain inside the storage of the first motor vehicle and may be transmitted via the mobile communication network. Therefore, just the not to the second motor vehicle transmitted data is transmitted via the mobile communication network.

Furthermore, a further data package from the first vehicle, which has not been transmitted to the second vehicle, is transmitted to the central electronic computing device, when the first vehicle is in a receiving area of an access point. For the example the prioritized data is transmitted to the second motor vehicle and from the second motor vehicle to the central electronic computing device. The data, which is not prioritized may remain inside the storage of the first motor vehicle and may be transmitted via an access point, when the first motor vehicle is inside of the receiving area, in particular the further data package is therefore later transmitted than the data package. Therefore, just the not to the second motor vehicle transmitted data is transmitted later to the central electronic computing device. Therefore data with time restrictions may be transmitted earlier, than data without time restrictions.

Another aspect of the invention relates to a computer program product with program code means, wherein when an electronic computing device is computing the program code means, the electronic computing device is configured to perform a method according to the preceding aspect.

The electronic computing device may comprise processors, integrated circuits, and further electronic parts for performing the method.

A still further aspect of the invention relates to a computer-readable storage medium comprising the computer program product.

Another aspect of the invention relates to a central system for transmitting a data package from a first vehicle to a central electronic computing device comprising at least the central electronic computing device, wherein the central system is configured to perform a method according to the preceding aspect. In particular, the method is performed by the central system.

The invention also includes further embodiments of the central system according to the invention which have features as already described in connection with the further embodiments of the method according to the invention. For this reason, the corresponding further embodiments of the central system according to the invention are not described again here.

The invention also encompasses combinations of the features of the embodiments described.

Examples of embodiments of the invention are described below. For this purpose, shows:

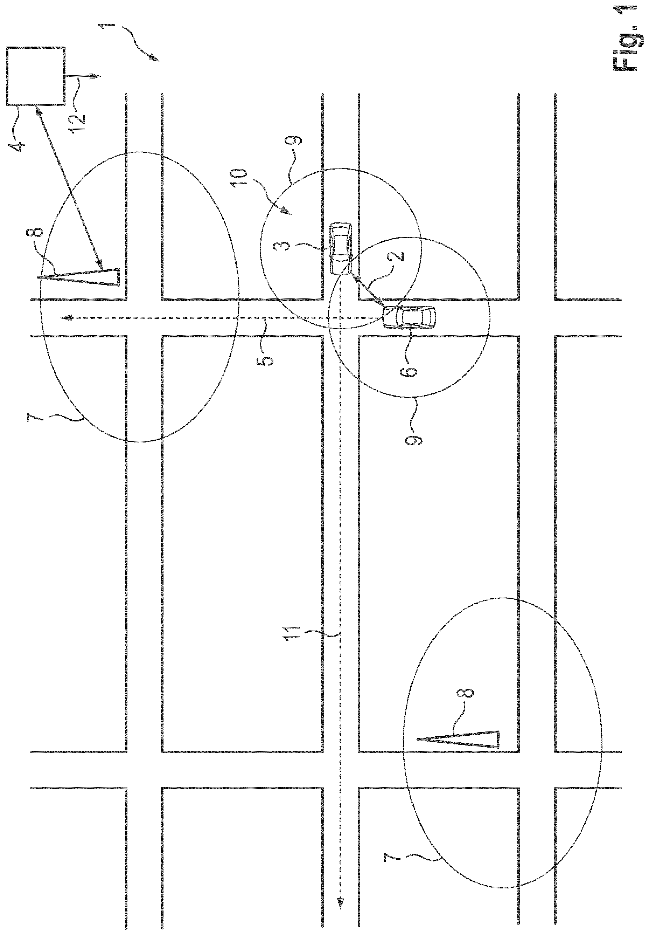

- Fig. 1: shows a schematic top view according to an embodiment of the central system.

The embodiment explained below is a preferred embodiment of the invention. In the embodiment example, the described components each represent individual features of the invention which are to be considered independently of one another and which each also further the invention independently of one another and are thus also to be regarded as a component of the invention individually or in a combination other than that shown. Furthermore, the described embodiment can also be supplemented by further of the already described features of the invention.

In the figures, functionally identical elements are each provided with the same reference signs.

Fig. 1 shows a schematic top view according to an embodiment of a central system 1. The central system 1 is configured for transmitting a data package 2 from a first vehicle 3 to a central electronic computing device 4, wherein the central system 1 comprises at least the central electronic computing device 4.

According to the embodiment, at least a route 5 of a second vehicle 6 is evaluated. If the route 5 of the second vehicle 6 leads the second vehicle 6 in a receiving area 7 of an access point 8 of the central system 1, and if the first vehicle 3 and the second vehicle 6 meet each other in a transmitting distance 9 for transmitting the data package 2 via a direct communication 10, for example only a short-range communication, then the data package 2 is transmitted via the direct communication 10 from the first vehicle 3 to the second vehicle 6. The data package 2 is transmitted from the second vehicle 6 to the central electronic computing device 4 via the access point 8, when the second vehicle 6 is in the receiving area 7 of the access point 8.

In particular, the first vehicle 3 may transmit a transmission request to the central electronic computing device 4 for transmitting the data package 2, and the central electronic computing device 4 decides to which vehicle 6, for example, of a plurality of further vehicles 6, the data package 2 is transmitted. Alternatively, the first vehicle 3 transmits the transmission request to the second vehicle 6 for transmitting the data package 2, and the second vehicle 6 transmits a transmitting capacity to the first vehicle 3, wherein the first vehicle 3 decides to transmit the data package 2 depending on the transmitted transmitting capacity.

The first vehicle 3 and/or the at least second vehicle 6 may be automated vehicles.

In another aspect, the data package 2 is just transmitted to the second vehicle 6 if the second vehicle 6 is earlier driving through a receiving area 7 than the first vehicle. This is shown in Fig. 1, because another, further route 11 from the first vehicle 3 leads the first vehicle 3 not in the receiving area 7 of an access point 8.

When the data package 2 is transmitted from the second vehicle 6 to the central electronic computing device 4, the central electronic computing device 4 transmits a confirmation message 12 to the first vehicle 3 for confirmation of receiving the data package 2.

Furthermore, the first vehicle 3 is clustering collected data in the plurality of data packages 2 and the plurality of data packages 2 are prioritized and depending on the prioritization, the data packages 2 are transmitted to the second vehicle 6. For example, the collected data are prioritized depending on time restrictions of each of the collected data.

If no transmitting of the data package 2 from the first vehicle 3 to the second vehicle 6 is performed, then the first vehicle 3 transmits the data package 2 via a mobile communication network. Furthermore, the first vehicle 3 deletes the data package 2 from an internal storage after transmitting the data package 2. A further data package from the first vehicle 3, which has not been transmitted to the second vehicle 2, may be transmitted to the central electronic computing device 4 via a mobile communication network. Alternatively, the further data may be transmitted to the central electronic computing device 6, when the first vehicle 3 is in a receiving area 7 of an access point 8.

In particular, Fig. 1 shows that the first vehicle 3 may cluster its collected data, which has to be sent to the central electronic computing device 4, which might also be called a backend server, restricted by a time limitation using an algorithm, in particular when it does need to be received at the backend. The first vehicle 3 clusters the data based on the time limits, for example the urgent ones first. The first vehicle 3 broadcasts to other vehicles, for example a second vehicle 6, that it needs to send an amount of data to the central electronic computing device 4 within a predetermined time. There might be multiple access points 8 which are directly connected with the central electronic computing device 4. There are the other vehicles, in particular according to this embodiment the second vehicle 6, with a certain planned route 5 and the knowledge of the location of the access points 8. The other vehicles receive the request from the first vehicle 3 and determine if they can upload the amount of data to the central electronic computing device 4 within the time. Those vehicles determine if they cross an access point 8 and if the time to exchange the data between the first vehicle 3 and them is sufficient. Is there a vehicle which can forward the data towards the central electronic computing device 4, then the second vehicle 6 receives the amount of data via direct communication. The second vehicle 6 responds to the first vehicle 3 that it crosses the access point 8 and is willing to upload the data for the first vehicle 3 within the predetermined time. The first vehicle 3 sends the data to the second vehicle 6. The second vehicle 6 receives the amount of data. The second vehicle 6 crosses the access point 8 and uploads the amount of data to the central electronic computing device 4. In case it cannot upload the data, it informs the first vehicle 3 via a public network. In case the second vehicle 6 is not available, the first vehicle 3 uses the public network for uploading the data package 2 to the central electronic computing device 4. The first vehicle 3 receives feedback from the central electronic computing device 4 when the upload was successful. The first vehicle 3 then may delete the data which has already been sent to the backend.

According to the shown embodiment in Fig. 1, the first vehicle 3 requests to get support for uploading the amount of data. The second vehicle 6 receives the request and determines that it will cross the access point 8 within the predetermined time and there is enough time to receive the data from the first vehicle 3 via direct communication. The second vehicle 6 accepts to forward the data from the first vehicle 3 via the access point 8 to the central electronic computing device 4. The first vehicle 3 sends the amount of data via direct communication to the second vehicle 6. The second vehicle 6 uploads the data from the first vehicle 3 via the access point 8. The access point 8 forwards the data to the central electronic computing device 4. The central electronic computing device provides feedback to the first vehicle 3 that it received the data. The first vehicle 3 may delete the data in its storage.

### Reference signs

- 1: central system
- 2: data package
- 3: first vehicle
- 4: central electronic computing device
- 5: route
- 6: second vehicle
- 7: receiving area
- 8: access point
- 9: transmitting distance
- 10: direct communication
- 11: further route
- 12: confirmation message

## Claims

1. A method for transmitting a data package (2) from a first vehicle (3) to a central electronic computing device (4) of a central system (1), the method comprising:
- evaluating a route (5) of at least a second vehicle (6);
- if the route (5) of the second vehicle (6) leads the second vehicle (6) in a receiving area (7) of an access point (8) of the central system (1) and if the first vehicle (3) and the second vehicle (6) meet each other in a transmitting distance (9) for transmitting the data package (2) via a direct communication (10), then transmitting the data package (2) via the direct communication (10) from the first vehicle (3) to the second vehicle (6); and
- transmitting the data package (2) from the second vehicle (6) to the central electronic computing device (4) via the access point (8), when the second vehicle (6) is in the receiving area (7) of the access point (8).

2. The method according to claim 1, wherein the first vehicle (3) is clustering collected data into a plurality of data packages (2) and the plurality of data packages (2) are prioritized and depending on their prioritization the data packages (2) are transmitted to the second vehicle (6).

3. The method according to claim 2, wherein the collected data are prioritized depending on time restrictions of each of the collected data.

4. The method according to any one of the claims 1 to 3, wherein the first vehicle (3) transmits a transmission request to the central electronic computing device (4) for transmitting the data package (2) and the central electronic computing device (4) decides to which of a plurality of vehicles (6) the data package (2) is transmitted.

5. The method according to any one of the claims 1 to 3, wherein the first vehicle (3) transmits a transmission request to the second vehicle (6) for transmitting the data package (2) and the second vehicle (6) transmits a transmitting capacity to the first vehicle (3), wherein the first vehicle (3) decides to transmit the data package (2) depending on the transmitted transmitting capacity.

6. The method according to any one of the claims 1 to 5, wherein the first vehicle (3) and/or at least the second vehicle (6) are automated vehicles (3, 6).

7. The method according to any one of the claims 1 to 6, wherein the data package (2) is just transmitted to the second vehicle (6), if the second vehicle (6) is earlier driving through a receiving area (7) than the first vehicle (3).

8. The method according to any one of the claims 1 to 7, wherein when the data package (2) is transmitted from the second vehicle (6) to the central electronic computing device (4), the central electronic computing device (4) transmits a confirmation message (12) to the first vehicle (3) for confirmation of receiving the data package (2).

9. The method according to any one of the claims 1 to 8, wherein if no transmitting of the data package (2) from the first vehicle (3) to the second vehicle (6) is performed, then the first vehicle (3) transmits the data package (2) via a mobile communication network.

10. The method according to any one of the claims 1 to 9, wherein the first vehicle (3) deletes the data package (2) from an internal storage after transmitting the data package (2).

11. The method according to any one of the claims 1 to 10, wherein a further data package from the first vehicle (3), which has not been transmitted to the second vehicle (6), is transmitted to the central electronic computing device (4) via a mobile communication network.

12. The method according to any one of the claims 1 to 10, wherein a further data package from the first vehicle (3), which has not been transmitted to the second vehicle (6), is transmitted to the central electronic computing device (4), when the first vehicle (2) is in a receiving area (7) of an access point (8).

13. A computer program product with program code means, wherein when an electronic computing device (4) is computing the program code means, the electronic computing device (4) is configured to perform the method according to any one of the claims 1 to 12.

14. A computer readable storage medium comprising the computer program product according to claim 13.

15. A central system (1) for transmitting a data package (2) from a first vehicle (3) to a central electronic computing device (4), comprising at least the central electronic computing device (4) and one access point (8), wherein the central system (1) is configured to perform a method according to any one of the claims 1 to 12.

## Amended claims

### Amended claims in accordance with Rule 137(2) EPC.

1. A method for transmitting a data package (2) from a first vehicle (3) to a central electronic computing device (4) of a central system (1), the method comprising:
- evaluating a route (5) of at least a second vehicle (6);
- if the route (5) of the second vehicle (6) leads the second vehicle (6) in a receiving area (7) of an access point (8) of the central system (1) and if the first vehicle (3) and the second vehicle (6) meet each other in a transmitting distance (9) for transmitting the data package (2) via a direct communication (10), then transmitting the data package (2) via the direct communication (10) from the first vehicle (3) to the second vehicle (6); and
- transmitting the data package (2) from the second vehicle (6) to the central electronic computing device (4) via the access point (8), when the second vehicle (6) is in the receiving area (7) of the access point (8), wherein
the first vehicle (3) transmits a transmission request to the central electronic computing device (4) for transmitting the data package (2) and the central electronic computing device (4) decides to which of a plurality of vehicles (6) the data package (2) is transmitted or wherein the first vehicle (3) transmits a transmission request to the second vehicle (6) for transmitting the data package (2) and the second vehicle (6) transmits a transmitting capacity to the first vehicle (3), wherein the first vehicle (3) decides to transmit the data package (2) depending on the transmitted transmitting capacity.

2. The method according to claim 1, wherein the first vehicle (3) is clustering collected data into a plurality of data packages (2) and the plurality of data packages (2) are prioritized and depending on their prioritization the data packages (2) are transmitted to the second vehicle (6).

3. The method according to claim 2, wherein the collected data are prioritized depending on time restrictions of each of the collected data.

4. The method according to any one of the claims 1 to 3, wherein the first vehicle (3) and/or at least the second vehicle (6) are automated vehicles (3, 6).

5. The method according to any one of the claims 1 to 4, wherein the data package (2) is just transmitted to the second vehicle (6), if the second vehicle (6) is earlier driving through a receiving area (7) than the first vehicle (3).

6. The method according to any one of the claims 1 to 5, wherein when the data package (2) is transmitted from the second vehicle (6) to the central electronic computing device (4), the central electronic computing device (4) transmits a confirmation message (12) to the first vehicle (3) for confirmation of receiving the data package (2).

7. The method according to any one of the claims 1 to 6, wherein if no transmitting of the data package (2) from the first vehicle (3) to the second vehicle (6) is performed, then the first vehicle (3) transmits the data package (2) via a mobile communication network.

8. The method according to any one of the claims 1 to 7, wherein the first vehicle (3) deletes the data package (2) from an internal storage after transmitting the data package (2).

9. The method according to any one of the claims 1 to 8, wherein a further data package from the first vehicle (3), which has not been transmitted to the second vehicle (6), is transmitted to the central electronic computing device (4) via a mobile communication network.

10. The method according to any one of the claims 1 to 8, wherein a further data package from the first vehicle (3), which has not been transmitted to the second vehicle (6), is transmitted to the central electronic computing device (4), when the first vehicle (2) is in a receiving area (7) of an access point (8).

11. A computer program product with program code means, wherein when an electronic computing device (4) is computing the program code means, the electronic computing device (4) is configured to perform the method according to any one of the claims 1 to 10.

12. A computer readable storage medium comprising the computer program product according to claim 12.

13. A central system (1) for transmitting a data package (2) from a first vehicle (3) to a central electronic computing device (4), comprising at least the central electronic computing device (4) and one access point (8), wherein the central system (1) is configured to perform a method according to any one of the claims 1 to 10.
